Europäisches Patentamt

European Patent Office

Office européen des brevets

(11) Veröffentlichungsnummer: **0 423 915 A2**

# EUROPÄISCHE PATENTANMELDUNG

(21) Anmeldenummer: 90250264.0

(22) Anmeldetag: 17.10.90

(30) Priorität: 18.10.89 DE 3935133

(43) Veröffentlichungstag der Anmeldung:
24.04.91 Patentblatt 91/17

(84) Benannte Vertragsstaaten:
CH DE FR GB IT LI

(51) Int. Cl.⁵: **B29D 31/00**, B29C 53/56,
B29C 67/14, B29C 69/00

W-1000 Berlin 30(DE)

(72) Erfinder: **Nick, Hans-Jürgen, Dipl.-Ing.**
**Rotdornstr. 3**
**W-1000 Berlin 41(DE)**

(74) Vertreter: **Christiansen, Henning, Dipl.-Ing.**
**Patentanwalt Pacelliallee 43/45**
**W-1000 Berlin 33(DE)**

(71) Anmelder: **HMS ANTRIEBSSYSTEME GMBH**
**Kurfürstenstrasse 14**

(54) **Verfahren zur Herstellung (teil-)ringförmiger Elemente.**

(57) Verfahren zur Herstellung (teil-) ringförmiger Elemente, bei dem eine Faser durch unidirektionales, mehrlagiges Wickeln auf die Mantelfläche einer spulenartigen Form aufgebracht wird, mit folgenden Verfahrensschritten:

a. unidirektionales, mehrlagiges Wickeln einer, insbesondere mit einem aushärtbaren Kunststoff (12) getränkten, Faser (5) auf die Mantelfläche (6) einer spulenartigen Form (1, 2),

b. Ergänzen der Form (1, 2) durch eine Abdeckung (8, 9) derart, daß ein die mehrlagige Wicklung aufnehmender Hohlraum entsteht,

c. gegebenenfalls Füllen des Hohlraums mit einem aushärtbaren Kunststoff (12),

d. Aushärten des Kunststoffes (12) und Entfernen des so entstandenen Vollrings (13) aus der Vorrichtung,

f. Umgeben des Rings (13) mit Gewebe (19, 20),

h. gegebenenfalls Tränken des äußeren Gewebes (19, 20) des (Teil-)Rings (17, 18) mit aushärtbaren Kunststoff (12) und

i. Aushärten der Gesamtanordnung.

Fig. 1g

EP 0 423 915 A2

## VERFAHREN ZUR HERSTELLUNG (TEIL-)RINGFÖRMIGER ELEMENTE

Die Erfindung betrifft ein Verfahren der im Oberbegriff des Anspruchs 1 angegebenen Art sowie eine Vorrichtung zur Durchführung des Verfahrens.

Die bekannten Verfahren zur Herstellung von faserverstärkten Kunststoff-Formteilen beruhen überwiegend auf Aus härtung eines Faser/Kunststoffgranulat-Gemisches unter Druck- und/oder Temperatureinfluß.

Nachteilig bei diesen Verfahren ist vor allem, daß nur eine begrenzte Menge kurzer Verstärkungsfasern in das Granulat eingearbeitet werden kann. Die Verarbeitung gerichteter Fasern ist damit nicht möglich. Mittels dieser Verfahren hergestellte Kunststoff-(teil-)ringe genügen nicht immer den anwendungsspezifischen Anforderungen im Hinblick auf Festigkeit und Stabilität.

Weiterhin ist aus der DE-27 36 124 ein Verfahren zur Herstellung eines an den Enden offenen schlauchförmigen Kraftübertragungselements aus Faserverbundwerkstoff bekannt. Dabei wird der im flüssigen Kunststoff getränkte Faserwerkstoff zunächst auf eine Form aufgewickelt und anschließend unter Druck und Temperatureinwirkung ausgehärtet.

Nachteilig bei diesem Verfahren ist jedoch, daß die dadurch hergestellten Teile nur ungenügende Festigkeitseigenschaften, also einen eingeschränkten Einsatzbereich aufweisen. Dies ist insbesondere auf die durch das Wickeln ausschließlich tangential gerichteten Fasern zurückzuführen. Für verschiedene Belastungsfälle ist deshalb das Kunststoffteil ungeeignet.

Es besteht daher die Aufgabe, ein Verfahren zur Herstellung von (teil-)ringförmigen Kunststoffelementen anzugeben, dessen Anwendung zu einer Verbesserung der Festigkeitseigenschaften der Kunststoff-(teil-)ringe führt. Au ßerdem ist eine Vorrichtung zur Durchführung des Verfahrens anzugeben.

Diese Aufgaben werden mit den kennzeichnenden Merkmalen der Ansprüche 1 bzw. 5 gelöst.

Das erfindungsgemäße Verfahren gestattet die Herstellung sehr belastungsfähiger (teil-)ringförmiger Kunststoffelemente.

Zur Strukturverstärkung werden in das Kunststoffmaterial mindestens eine unidirektional gerichtete Faser, insbesondere Kohlenstoff-Faser und mindestens ein Gewebeschlauch bzw. Gewebestreifen eingearbeitet. Unter Gewebe werden hier flexible textile Gebilde im weitesten Sinne verstanden, insbesondere auch Rovings, Fasergarne, Gewirke, Gestricke, Geflechte und flexible Vliese aus Fasern oder Garnen. Auf diese Weise ist es erstmals möglich Bohrungen in Ringkörper aus faserverstärktem Kunststoff einzubringen, die die unidirektionale tangentiale Faserstruktur schwächen. Durch die Armierung der Außenoberfläche wird der Festigkeitsverlust mehr als ausgeglichen. Beide Faserstrukturen ergänzen sich in ihren die Festigkeit der Kunststoffmatrix heraufsetzenden Eigenschaften.

Erfindungsgemäß erfolgt als erster Verfahrensschritt ein unidirektionales Wickeln einer, insbesondere in aushärtbarem Kunststoff getränkte, Faser auf eine spulenartige Vorrichtung, deren Aufbau weiter unten näher beschrieben ist. Die Faser wird durch Rotation der spulenartigen Vorrichtung gegen die Faserspannung gezogen und auf die Mantelfläche des Spulenkörkers gewickelt.

Je nach späterem Verwendungszweck des Ringes wird eine vorgegebene Faserlänge, ensprechend wenigen Umdrehungen bis zu mehreren Lagen, aufgebracht.

Die Wickelbreite entspricht bei Ringen mit rechteckigem oder quadratischem Profil der späteren Dicke des Ringes. Bei derartigen Ringen kann an den Rändern der Wickelbreite eine dickere Faserschcht als im mittleren Bereich aufgespult werden. Dadurch wird erreicht, daß nicht nur die nach innen gerichtete Ringfläche sondern auch mindestens jeweils ein Teil der beiden kreisringförmigen Stirnflächen des Ringes große Anteile der Verstärkungsfaser enthalten.

Die Führung der Faser über die Wickelbreite erfolgt entweder durch entsprechende, der Rotation überlagerte Pendelbewegungen der spulenartigen Vorrichtung oder durch seitliche Auslenkung der Faser mittels einer Faserführungseinrichtung.

Der nach dem Aufwickelvorgang verbleibende Raum zwischen den Spulenrändern wird mit einer dicht schließenden Abdeckung versehen, wodurch ein ringförmiger Hohlraum entsteht, der mit aushärtbarem Kunststoff gefüllt wird. Der dünnflüssige Kunststoff dringt auch in die Faserzwischenräume ein. Nach dem Aushärten kann dann der faserverstärkte Kunststoffring aus der Vorrichtung entfernt werden.

Anschließend kann der Ring, vorzugsweise durch radiales Zersägen, in zwei Halbringe zerlegt werden (Bedarfsweise kann auch eine Unterteilung in kleineren Brüchen entspre chende Teilringe vorgenommen werden). Durch die Aufteilung wird in vorteilhafter Weise ein erleichtertes Überziehen mit einem äußeren Gewebeschlauch bzw. Umwickeln mit einem Faserstreifen mittels einer maschinellen Vorrichtung ermöglicht.

Nach Beendigung des Bearbeitungsprozesses der Teilringe kann je nach Anwendungszweck ein Wiederzusammenfügen der Teilringe zu einem Vollring erforderlich sein. Dazu werden die Trennstellen vorzugsweise an ihren Enden angeschrägt, verzapft oder mit einer Nut-Feder-Verbindung versehen.

Durch das Überziehen eines Gewebeschlauches über den Ring oder diagonales Umwickeln des Halbringes mit einem Gewebestreifen wird eine weitere Erhöhung der Festigkeit erreicht. Zur Erleichterung des Überziehens bzw. Umwickelns wird bevorzugt elastisches Gewebe verarbeitet. Die Maschenstruktur des Gewebes enthält auch Anteile, die senkrecht zur Umfangsrichtung, in der die unidirektional gerichtete Faser gewickelt ist, ausgerichtet sind. Der damit verbundene Verstärkungseffekt ergänzt somit die verstärkende Wirkung der unidirektional gerichteten Faser nicht nur quantitativ sondern auch im Hinblick auf die Wirkungsrichtung.

Der Teilring wird nachfolgend noch einmal in einem dünnflüssigen Kunststoffbad getränkt, bzw. mit einer Kunststoffschicht umgeben. Dazu dient vorzugsweise eine Form, in deren Hohlraum der Teilring derart einsetzbar ist, daß die Stirnflächen des Teilringes die Auflage- bzw. Standflächen bilden und die restlichen Flächen einen Abstand zu der Hohlraumkontur aufweisen. Dieser Zwischenraum wird mit flüssigem, aushärtendem Kunststoff aufgefüllt.

Nach dem Aushärten wird der fertige Kunststoffteilring aus der Form entfernt und steht damit einer zweckentsprechenden Weiterverarbeitung zur Verfügung.

Als Kunststoffe lassen sich jegliche aushärtenden Materialien entsprechender Festigkeit verwenden. Bevorzugt wird jedoch Thermoplastmaterial verwendet.

Eine erfindungsgemäße Vorrichtung zur Durchführung der ersten Verfahrensschritte hat im wesentlichen den Aufbau einer axial drehbaren Spule, die aus zwei verbindbaren und wieder voneinander trennbaren Formkörpern besteht. Die Trennfläche zur Bildung der beiden Formkörper ist senkrecht zur Drehachse ausgerichtet und verläuft entlang einer Schnittfläche des kleinsten Durchmessers. Durch die zweiteilige Ausführung ist der mit Hilfe dieser Vorrichtung als Zwischenprodukt herzustellende Faser/Kunststoffring von der Vorrichtung abnehmbar.

Vorzugsweise besteht die Vorrichtung aus zwei gleichen kreisscheibenartigen Formkörpern, deren Stirnflächen den größten und den kleinsten Durchmesser des Formkörpers aufweisen und die bei vollflächig aneinandergrenzenden Stirnflächen des kleinsten Durchmessers miteinander verbindbar sind.

Zur Herstellung von Ringen mit rechteckigem oder quadratischen Querschnitt ist der Formkörper in zwei kreisschei benförmige Bereiche unterschiedlicher, aber konstanter Durchmesser und Dicken gegliedert, wobei der Bereich mit dem größeren Durchmesser die kleinere Dicke aufweist. Der Aufbau zweier derartiger, zusammengesetzter Formkörper entspricht dem einer Spule mit zylinderförmiger Mantelfläche und kreisscheibenförmigen seitlichen Begrenzungen des Aufspulbereiches.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1a ein Ausführungsbeispiel einer erfindungsgemäßen Vorrichtung in frontaler Ansicht,

Figur 1b eine perspektivische Darstellung eines Aufwikkelvorganges als ersten Verfahrensschritt,

Figur 1c die Vorrichtung gemäß Figur 1a mit gemäß Figur 1b aufgewickelter Faser in frontaler Ansicht,

Figur 1d eine perspektivische Darstellung eines Einfüllvorganges als weiteren Verfahrensschritt,

Figur 1e die mit einer Abdeckung versehene Vorrichtung gemäß den Figuren 1a und 1c mit gemäß Figur 1d eingefülltem Kunststoff,

Figur 1f eine perspektivische Darstellung des aus der Vorrichtung entfernten Ringes vor dem Verfahrensschritt des Zersägens,

Figur 1g eine perspektivische Darstellung zweier Halbringe mit zwei Ausführungsvarianten zur Ummantelung des Ringes als weiteren Verfahrensschritt,

Figur 1h eine Schnittdarstellung eines gemäß Figur 1g ummantelten Halbringes in einer Gießform und

Figur 2 einen Querschnitt eines nach einem erfindungsgemäßen Verfahren hergestellten Halbringes entlang A-A gemäß Figur 1h.

Die erfindungsgemäßen Verfahrensschritte werden nachfolgend am Beispiel der Herstellung von als Halbringe ausgebildeten Teilringen näher erläutert.

Eine in Figur 1a dargestellte erfindungsgemäße Vorrichtung besteht im wesentlichen aus zwei gleichen, kreisscheibenartigen Formkörpern 1 und 2 mit zwei Bereichen unterschiedlicher Durchmesser, die mittels einer Schraubverbindung 3 bei vollflächig aneinandergrenzenden Stirnflächen des kleineren Durchmessers zu einer Spule zusammengesetzt sind. Die als Spule ausgebildete Vorrichtung ist um die Längsachse 4 ihrer zylindrischen Teile drehbar gelagert.

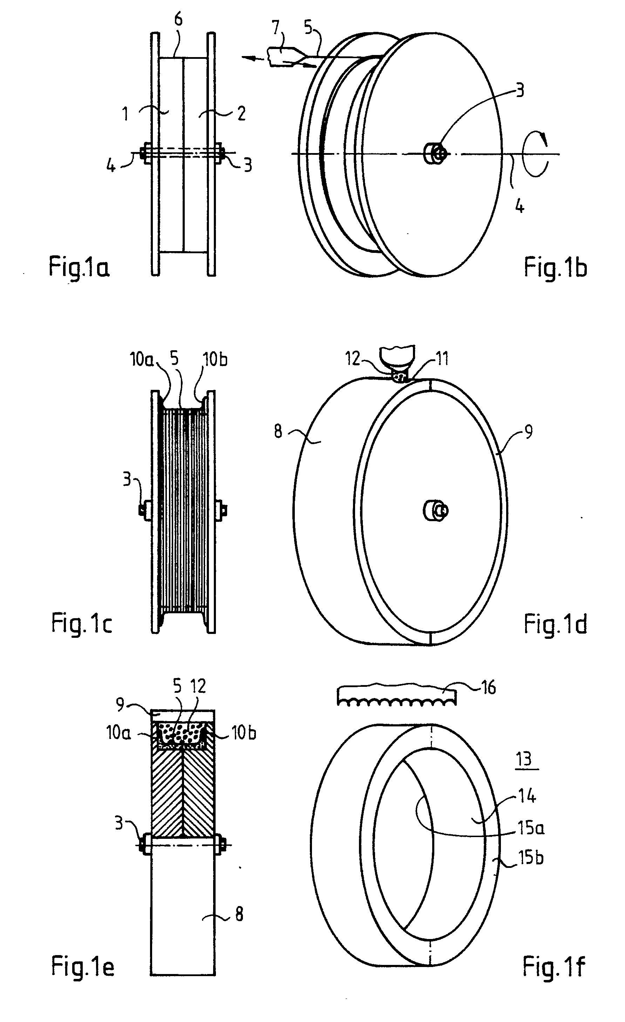

Figur 1b veranschaulicht einen ersten Verfahrensschritt zur Herstellung von faserverstärkten Kunststoffhalbringen, der darin besteht, daß eine unidirektional gerichtete Kohlenstoff-Faser 5 auf die Mantelfläche 6 (Figur 1a) der Vorrichtung aufgespult wird. Die Faser 5 wird dazu mittels einer Faserführungseinrichtung 7 unter Spannung gehalten und gleichzeitig über die Breite der Mantelfläche - der Wickelbreite - gelenkt, während die Spule rotiert und die Faser 5 gegen die Faserspannung zieht.

Die von der Bewegungssteuerung der Faserführungseinrichtung 7 bestimmte Wickelform ist in Figur 1c wiedergegeben. Es ist ersichtlich, daß an den Rändern der Wickelbreite eine größere Anzahl von Faserlagen übereinander gewickelt wurden als in der Mitte. Durch kurze Bewegungspausen an den Umkehrpunkten der pendelartigen Auslenkung der Faser 5 mittels der Faserführungseinrichtung 7 ist diese Wickelstruktur auf einfache Weise erzeugbar.

Im Anschluß an den Wickelvorgang wird - wie Figur 1d zeigt - die noch offene Außenfläche des von der Mantelfläche 6 bzw. der Faser 5 und den scheibenförmigen Seitenteilen 10a und 10b der Spule begrenzten Raumes mit zwei halbringartig geformten Abdeckungen 8 und 9 dicht verschlossen. Der so entstandene Hohlraum wird über eine Gießöffnung 11 mit flüssigem Kunststoff 12 gefüllt. Die spulenartige Vorrichtung mit der Abdeckung 10a/10b und dem eingefüllten Kunststoff 12 ist in Figur 1e dargestellt.

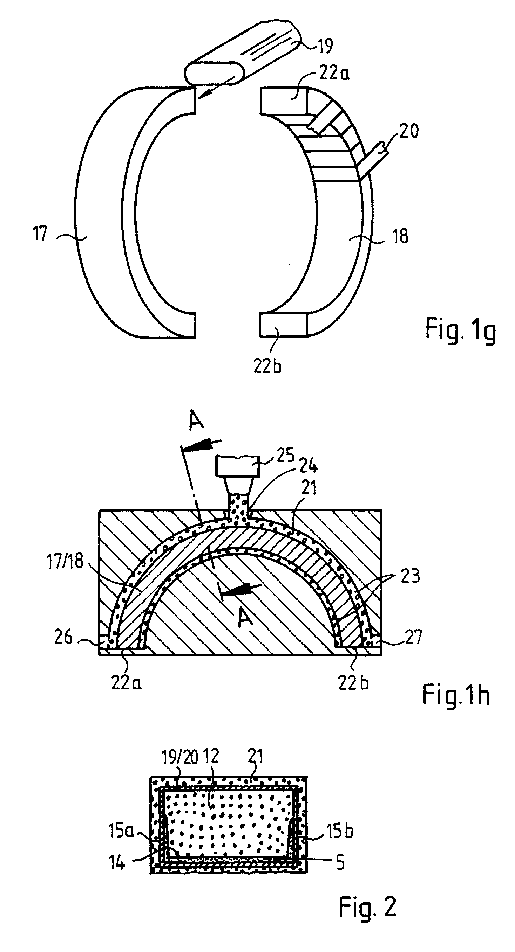

Nach dem Abkühlen bzw. Aushärten des Faser/Kunststoff-Ringes 13 wird die Schraubverbindung 3 zwischen den beiden Formkörpern 1 und 2 gelöst, wodurch die beiden Formkörper 1 und 2 von dem Ring 13 abziehbar sind. Der Ring 13 liegt nunmehr in der in Figur 1f dargestellten Konfiguration vor. Die Innenfläche 14 und jeweils mindestens eine an die Innenfläche 14 angrenzende Teilfläche der Seitenflächen 15a und 15b werden von der gewickelten unidirektional gerichteten Faser 5 begrenzt. Zur weiteren Verarbeitung wird der Ring 13 mittels einer in Figur 1f angedeuteten Sägevorrichtung 16 radial in zwei gleichgroße in Figur 1g dargestellte Halbringe 17 und 18 durchtrennt.

In Figur 1g sind außerdem zwei Varianten eines sich anschließenden Verfahrensschrittes schematisch wiedergegeben. Gemäß Figur 1g wird der Halbring 17 mit einem elastischen Gewebeschlauch 19 überzogen, während der Halbring 18 mit einem Gewebestreifen 20 diagonal umwickelt wird.

Zur endgültigen Formgebung und zur Fixierung des Gewebeschlauches 19 bzw. -streifens 20 wird der Halbring 17 bzw. 18 abschließend mittels einer in Figur 1h im Schnitt dargestellten Gießform mit einer Kunststoffschicht 21 ummantelt. Die Stirnflächen 22a und 22b des Halbringes 17 bzw. 18 dienen beim Einsetzen des Halbringes 17 bzw. 18 in die Gießform als Auflage- bzw. Standflächen, während zwischen den restlichen Flächen des Halbringes 17 bzw. 18 und der Hohlraumkontur ein Zwischenraum 23 verbleibt. Dieser Zwischenraum 23 wird über eine an der höchsten Stelle der Gießform vorgesehene Öffnung 24 mittels einer Gießvorrichtung 25 mit flüssigem Kunststoff gefüllt. Die in dem Zwischenraum 23 befindliche Luft entweicht während des Gießvorganges durch zwei seitliche Öffnungen 26 und 27, welche den Zwischenraum 23 an den untersten Stellen - der Stirnflächenauflage unmittelbar benachbart - luftdurchlässig, jedoch undurchlässig für den eingegossenen Kunststoff, mit dem Außenraum verbindet.

Die Zusammensetzung und die Querschnittsform des fertigen Halbringes ist in Figur 2 anhand eines Schnittes entlang A-A gemäß Figur 1h wiedergegeben. Ein Kunststoffkern 12 mit angenähert rechteckförmigem Querschnitt ist an der Innenfläche 14 und angrenzenden Bereichen der Seitenflächen 15a und 15b mit sich in Umfangsrichtung erstreckenden Verstärkungsfasern 5 versehen. Eine Gewebeschicht in Form eines Schlauches 19 oder diagonal gewickelten Streifens 20 als zweite Verstärkungsschicht und eine äußere Kunststoffhülle 21 umschließen den Faser/Kunststoffhalbring. Durch den verfahrensgemäß schichtweisen Aufbau des Halbringes, insbesondere durch die doppelte Verstärkung mittels der unidirektional gerichteten Faser 5 und der Gewebeumhüllung 19 bzw. 20 entsteht ein sehr stabiler und wiederstandsfähiger Halbring.

In diesen Halbring können - in radialer oder auch axialer Richtung bzw. beliebigen dazwischen gelegenen Richtungen auch mit tangentialer Komponente - Bohrungen eingebracht werden, welche den unidirektionalen Faserbereich durchqueren und einen Teil dieser Fasern durchtrennen. Der Durchmesser dieser Bohrungen kann durchaus bis zur Hälfte des Durchmessers des Ringprofils ausmachen.

Mehrere Teilringe lassen sich auch vor dem Aufbringen der äußeren Gewebeschicht wieder zu einem Vollring bzw. einem größeren Teilring zusammenfügen. Hierzu sind bevorzugt den Verbindungsstellen Zapfen oder Nut-Feder-Verbindungen vorgesehen. Da hiermit nicht die Festigkeit der ungeschnittenen unidirektionalen Fasern erreicht werden kann, ist diese Ausführung bevorzugt für solche Fälle vorgesehen, bei denen der zusammengesetzte Ring an den Trennstellen durch Einspannungen und dergl. unterstützt wird.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen.

**Ansprüche**

1. Verfahren zur Herstellung (teil-) ringförmiger Elemente, bei dem eine Faser durch unidirektionales, mehrlagiges Wickeln auf die Mantelfläche einer spulenartigen Form aufgebracht wird, **gekennzeichnet durch** folgende Verfahrensschritte:

a. unidirektionales, mehrlagiges Wickeln einer, insbesondere mit einem aushärtbaren Kunststoff (12) getränkten, Faser (5) auf die Mantelfläche (6) einer spulenartigen Form (1, 2),

b. Ergänzen der Form (1, 2) durch eine Abdeckung (8, 9) derart, daß ein die mehrlagige Wicklung aufnehmender Hohlraum entsteht,

c. gegebenenfalls Füllen des Hohlraums mit einem aushärtbaren Kunststoff (12),

d. Aushärten des Kunststoffes (12) und Entfernen des so entstandenen Vollrings (13) aus der Vorrichtung,

f. Umgeben des Rings (13) mit Gewebe (19, 20),

h. gegebenenfalls Tränken des äußeren Gewebes (19, 20) des (Teil-)Rings (17, 18) mit aushärtbaren Kunststoff (12) und

i. Aushärten der Gesamtanordnung.

2. Verfahren nach Anspruch 1, **gekennzeichnet durch** die zusätzlichen Merkmale:

e. Auftrennen des Rings (13) an mindestens einer Stelle oder Teilen des Ringes (13) in Teilringe (17 und 18),

g. gegebenenfalls Zusammenfügen an der oder den Trennstelle(n).

3. Verfahren nach einem der Ansprüche 1 oder 2, **dadurch gekennzeichnet, daß**

f1. das Umgeben des Rings mit einem Gewebe durch Überstreifen eines Gewebeschlauches (19) oder Umwickeln mit einem Gewebestreifen (20) in Diagonalrichtung erfolgt.

4. Verfahren nach Anspruch 2, **dadurch gekennzeichnet, daß**

e1. die Trennstellen an ihren Enden angeschrägt, verzapft oder mit einer Nut-Feder-Verbindung versehen werden.

5. Verfahren nach einem der vorangehenden Ansprüche, **dadurch gekennzeichnet, daß**

h1. das Tränken in einer geschlossenen Form durch Auffüllen eines darin befindlichen Hohlraums (23) mit aushärtbarem Kunststoff (21) erfolgt.

6. Verfahren nach einem der vorangehenden Ansprüche, **dadurch gekennzeichnet, daß**

j. der (Teil-)Ring (17, 18) mit Bohrungen versehen wird.

7. Verfahren nach einem der vorangehenden Ansprüche, **gekennzeichnet durch** die Verwendung von Kohlenstoff-Fasern (5).

8. Verfahren nach einem der vorangegangenen Ansprüche, **dadurch gekennzeichnet, daß** der Ring (13) durch Zersägen in radialer Richtung aufgetrennt wird.

9. Vorrichtung zur Durchführung des Verfahrens nach einem der vorangehenden Ansprüche, **dadurch gekennzeichnet,** daß ein spulenförmiger, axial drehbar gelagerter Rotationskörper vorgesehen ist, der senkrecht zur Rotationsachse entlang einer Trennfläche des kleinsten Durchmessers in zwei Formkörper (1, 2) zerlegbar ist.

10. Vorrichtung nach Anspruch 9, **dadurch gekennzeichnet,** daß zwei im wesentlichen identische, scheibenartige Formkörper (1, 2) vorgesehen sind, deren Stirnflächen den größten und den kleinsten Durchmesser des Rotationsköprpers aufweisen, wobei die Formkörper (1, 2) an den Stirnflächen des kleineren Durchmessers miteinander verbindbar sind.

11. Vorrichtung nach einem der Ansprüche 9 oder 10, **dadurch gekennzeichnet,** daß eine einen durch die Mantelfläche (6) und die Spulenform gebildeten ringförmigen Raumbereich dichtend umspannender Mantelkörper als Abdeckung (8, 9) vorgesehen ist.

Fig.1a

Fig.1b

Fig.1c

Fig.1d

Fig.1e

Fig.1f

17 · 19 · 22a · 20 · 18 · 22b

**Fig. 1g**

A · 25 · 24 · 21 · 17/18 · A · 23 · 26 · 22a · 22b · 27

**Fig. 1h**

19/20 · 12 · 21 · 15a · 15b · 14 · 5

**Fig. 2**